## Europäisches Patentamt
## European Patent Office
## Office européen des brevets

(19)

(11) Numéro de publication: **0 192 499**
**B1**

(12)

# FASCICULE DE BREVET EUROPÉEN

(45) Date de publication du fascicule du brevet:
**10.08.88**

(21) Numéro de dépôt: **86400048.4**

(22) Date de dépôt: **10.01.86**

(51) Int. Cl.⁴: **C 22 F 1/18,** G 21 C 3/06

(54) **Procédé de fabrication de plaquettes en alliage de zirconium.**

(30) Priorité: **10.01.85 FR 8500310**

(43) Date de publication de la demande:
**27.08.86 Bulletin 86/35**

(45) Mention de la délivrance du brevet:
**10.08.88 Bulletin 88/32**

(84) Etats contractants désignés:
**BE CH DE GB IT LI NL SE**

(56) Documents cité:
**FR-A-1 307 550**
**GB-A-997 761**

(73) Titulaire: **FRAMATOME, Tour Fiat 1 place de la Coupole, F-92400 Courbevoie (FR)**

(72) Inventeur: **Morel, Michel, 1, Chemin de la Pomme, F-69160 Tassin (FR)**
Inventeur: **Mardon, Jean- Paul, 27A, rue André Lassagne, F-69300 Caluire (FR)**

(74) Mandataire: **Fort, Jacques, CABINET PLASSERAUD 84, rue d'Amsterdam, F-75009 Paris (FR)**

LIBER, STOCKHOLM 1988

Descr:

L'invention concerne la fabrication de plaquettes en alliage de zirconium destinées à être utilisées dans des organes de structure de réacteurs nucléaires et qui, en conséquence, doivent présenter des propriétés mécaniques à chaud et de résistance chimique à l'environnement rencontré dans une cuve de réacteur nucléaire (eau borée du circuit primaire dans le cas d'un réacteur à eau sous pression).

On utilise largement, dans les réacteurs nucléaires, des alliages à base de zirconium, dits zircaloy. Parmi ces derniers, on utilise à l'heure actuelle essentiellement les zircaloy 4 qui comportent essentiellement, en plus du zirconium, de l'étain, du fer et du chrome, tandis que la teneur en nickel est très faible, habituellement inférieure à 70 ppm. Le zircaloy 4 peut également comporter, en plus des impuretés inévitables, des éléments d'addition et notamment du carbone qui, à l'état solubilisé à une teneur comprise entre 80 et 270 ppm, améliore les propriétés mécaniques.

On a déjà proposé de très nombreux traitements destinés à améliorer les propriétés mécaniques ou chimique des alliages à base de zirconium (brevets FR 1 525 276, 1 327 734, 2 307 884, 2 019 029, 2 219 979 par exemple). La plupart de ces traitements visent essentiellement à donner à l'alliage la résistance élevée au fluage souhaitable pour réduire les risques de rupture d'une gaine formée en cet alliage. Mais ces résultats sont habituellement obtenus aux dépens d'autres propriétés de l'alliage, et en particulier ont une incidence défavorable sur les possibilités de travail à froid de l'alliage à l'état de feuille.

On connaît par ailleurs des procédés de traitement spécialement destinés à des alliages à base de zirconium contenant du niobium. Le document GB-A-997 761 prévoit un procédé ayant une étape essentielle d'introduction d'oxygène. L'opération de vieillissement prévue est indissociable de cette introduction d'oxygène et de la trempe ultérieure. Le document FR-A-1 307 550 prévoit un traitement thermique pour améliorer la tenue à la corrosion, à une température qui semble être supérieure au point de recristallisation.

L'invention vise notamment à fournir un procédé de fabrication de plaquettes dont l'étape finale de réalisation consiste en une mise en forme à froid de feuillard, procédé répondant mieux que ceux antérieurement connus aux exigences de la pratique. L'invention vise particulièrement à fournir dans ce but des feuillards qui, a la fois, présentent les propriétés nécessaires à la réalisation de plaquettes de qualité satisfaisante et ont une ductilité autorisant la mise en forme définitive par des procédés de travail à froid tels que l'emboutissage et le poinçonnage.

Dans ce but, l'invention propose notamment un procédé selon lequel on réalise par laminage à chaud, puis laminage à froid à taux d'écrouissage élevé, un feuillard présentant l'épaisseur des plaquettes à réaliser par découpe et formage à froid; procédé caractérisé en ce qu'on soumet le feuillard à un recuit de détensionnement à une température inférieure à la température de recristallisation.

Notamment dans le cas où les plaquettes sont destinées à être intégrées à une grille de maintien de crayons de combustible nucléaire et doivent, pour cela, présenter des bossettes d'appui sur les crayons, les plaquettes sont découpées transversalement par rapport au sens de laminage du feuillard en vue d'obtenir une résistance mécanique élevée, permettant de supporter les efforts en cas de séisme, et une absence de fluage.

L'invention est notamment applicable aux alliages du type zircaloy 4 et, dans ce cas, le recuit sera effectué, pendant 2 à 100 heures, entre 440 et 490° C, généralement à une température de l'ordre de 460° C pendant une durée de l'ordre de 24 heures. Un tel traitement laisse subsister des propriétés voisines de celles du métal écroui, la recristallisation du zircaloy 4 commençant à partir se 500° C environ.

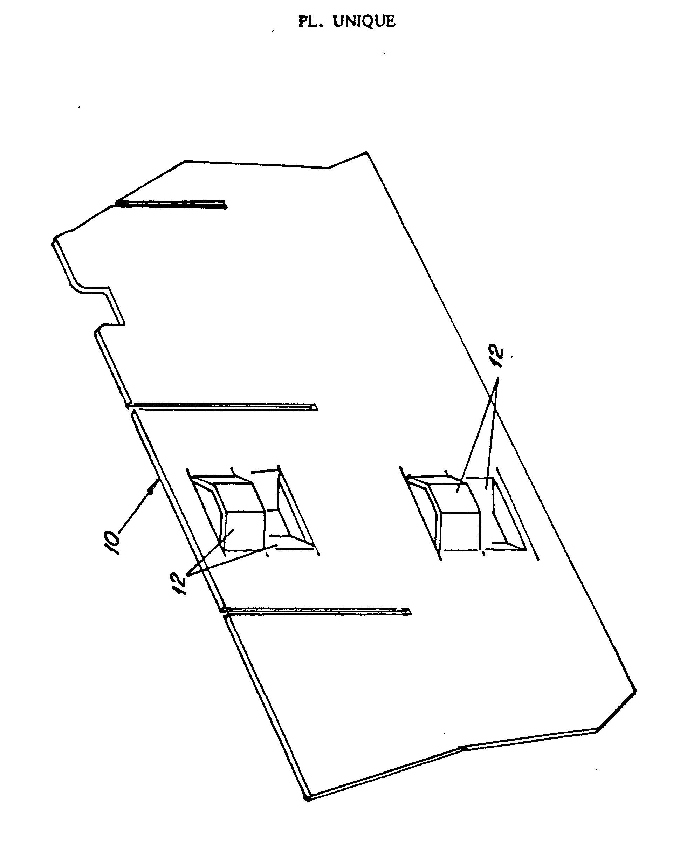

L'invention sera mieux comprise à la lecture de la description qui suit d'un procédé particulièrement utilisable pour constituer des plaquettes destinées à des grilles du genre faisant l'objet de la demande de brevet FR n° 82 15662 FR-A-2 533 352 à laquelle on pourra se reporter. Une telle plaquette est schématiquement montrée sur la Figure unique ci-jointe. Cette plaquette 10 comporte, à intervalles réguliers, des bossettes 12 constituées par emboutissage en deux passes à froid (matriçage et poinçonnage). Ces plaquettes, ayant une épaisseur qui est habituellement de 0,3 ou 0,4 mm, constituent les entretoises internes de la grille, dont le cadre est constitué en feuillard plus épais, habituellement de 0,6 ou 0,8 mm.

Il est nécessaire que les plaquettes une fois réalisées présentent un faible grandissement transversal sous les radiations, une résistance mécanique élevée et une absence de fluage des bossettes. Pour remplir cette dernière condition, on peut admettre que le feuillard dans lequel sont découpées les plaquettes 10 doit avoir les caractéristiques minimales suivantes à 315° C:
- limite d'élasticité E à 0,2 % : 250 MPa;
- charge de rupture 280 MPa.

Par ailleurs, l'allongement uniformément réparti en traction à température ambiante doit être au minimum de 4 % pour permettre la mise en forme par emboutissage et pliage, notamment pour réaliser des bossettes 12 du genre montré sur la Figure. Cet allongement peut être obtenu en recristallisant totalement le zircaloy par recuit d'évacuation de la majeure partie des dislocations introduites par le travail à froid de laminage ; les caractéristiques mécaniques a 315° C diminuent alors, et en particulier la limite d'élasticité à 0,2 % tombe à 90 MPa environ ; cette dégradation des caractéristiques mécaniques se traduirait par une déformation platiques permanente de la plaquette lors de chargement des crayons dans la grille. L'accentuation de la dégradation à la suite de l'irradiation aurait pour conséquence une diminution de l'effort de maintien des crayons de combustible

Le procédé dont les étapes successives seront décrites ci-après permet, lorsqu'il est appliqué au zircaloy 4 dont les teneurs nominales sont environ 1,5 % Sn, 0,21 % Fe, 0,10 % Cr, d'arriver à un compromis satisfaisant entre les propriétés de déformation à froid et la tenue à chaud sous irradiation.

On part généralement de lingots de zircaloy 4, obtenus par fusion sous vide ou sous atmosphère inerte qu'on transforme par laminage ou forgeage à partir du domaine β pour obtenir un larget dont l'épaisseur est de l'ordre de 100 mm. Par des opérations de laminage à chaud en phase α et β qui peuvent être du genre décrit dans le brevet FR 1 525 276, à une température comprise entre 850 et 950°C, on ramène l'épaisseur à une valeur comprise entre 20 et 30 mm. Les feuilles ainsi obtenues sont homogénéisées et trempées en phase β, puis laminées à chaud pour les amener à une épaisseur de 6 mm par exemple. Une série de cycles de laminage à froid, de dégraissage, de recuit sous vide, de recristallisation, permet d'arriver finalement à une épaisseur qui, dans le cas où l'on recherche des épaisseurs de plaquettes mentionnées plus haut, peut être de 0,9 mm pour les plaquettes entretoises et 1,25 mm pour les plaquettes de cadre.

On procède alors à un dernier traitement mécanique constitué par un laminage à froid dont le taux d'écrouissage est d'au moins 35 %, ce qui ramène l'épaisseur de 1,25 à 0,6 mm ou de 0,9 à 0,4 mm. Ce taux d'écrouissage en déformation uniaxiale peut dépasser 50 % grâce aux équipements maintenant disponibles qui permettent de maintenir un rapport constant entre la force de traction exercée lors du laminage à froid et la compression dans le sens de l'épaisseur.

Le feuillard ainsi obtenu présente des propriétés mécaniques et chimiques extrêmement favorables du point de vue de la tenue ultérieure en réacteur. Mais sa ductilité est insuffisante pour permette l'embboutissage à froic. Cette ductilité peut être améliorée et rendue suffisante en soumettant les feuillards à un recuit de détensionnement de longue durée, typiquement 24 heures environ, à une température de 460°C, c'est-à-dire à une valeur inférieure à celle à laquelle commence la recristallisation. Ce recuit, comme les autres opérations à haute température, est effectué sous vide pour éviter l'oxydation.

Le feuillard ainsi obtenu présente une texture ayant:

- une désorientation de 15 à 20° de la normale au plan de base de la direction normale vers la direction de laminage,

- une direction ( 1010) parallèle à la direction de laminage.

Ces composantes de la texture sont favorables à la déformation selon la direction de laminage, et à une croissance sous irradiation qui est plus faible dans la direction transversale au feuillard que dans la direction longitudinale du feuillard. Pour tenir compte de cette propriété, on découpera les plaquettes dans le sens transversal, afin de limiter l'allongement sous irradiation et d'obtenir des emboutis exempts de porosité et de fissurations.

Il faudra, en conséquence, réaliser des feuillards ayant une largeur au moins égale à la longueur des plaquettes, c'est-à-dire à 240 mm pour les assemblages couramment utilisés à l'heure actuelle.

## Revendications

1. Procédé de fabrication de plaquettes en alliage de zirconium selon lequel on réalise, par laminage à chaud, puis laminage à froid à taux d'écrouissage élevé, un feuillard présentant l'épaisseur des plaquettes à réaliser par découpe et formage à froid, procédé caractérisé en ce qu'on soumet le feuillard à un recuit de détensionnement à une température inférieure à la température de recristallisation.

2. Procédé selon la revendication 1 de fabrication de plaquettes présentant des bossettes d'appui, destinées à être intégrées à une grille de maintien de crayons de combustible nucléaire, caractérisé en ce qu'elles sont découpées transversalement au sens de laminage du feuillard en vue d'obtenir une résistance mécanique élevée, permettant de supporter les efforts en cas de séisme, et une absence de fluage.

3. Procédé selon la revendication 1 ou 2, caractérisé en ce que les plaquettes sont réalisées en alliage à base de zirconium contenant, en plus du zirconium, de l'étain, du fer et du chrome et éventuellement 80 à 270 ppm de carbone et dont la teneur en nickel est inférieure à 70 ppm.

4. Procédé selon la revendication 1, 2 ou 3, caractérisé en ce que le recuit est effectué à une témpérature comprise entre 440 et 490°C pendant une durée de 2 à 100 heures.

5. Procédé selon la revendication 4, caractérisé en ce que le recuit est effectué à une témpérature de l'ordre de 460°C pendant une durée de l'ordre de 24 heures.

## Patentansprüche

1.Verfahren zur Herstellung von Plättchen aus Zirkoniumlegierung, gemäß dem man durch Warmwalzen, danach Kaltwalzen mit hohem Kaltverformungsgrad ein Band erzeugt, das die Dicke der durch Zerschneiden und spanlose

Kalt ... orm, ing herzustellenden Plättchen aufweist,

dadurch gekennzeichnet,

daß man das Band einem Spannungsfreiglühen bei einer Temperatur unter der Rekristallisationstemperatur unterwirft.

2. Verfahren nach dem Anspruch 1 zur Herstellung von Abstützbuckel aufweisenden Plättchen, die zum Einbau in ein Gitter zum Halten von Kernbrennstoffstäben bestimmt sind,

dadurch gekennzeichnet,

daß sie quer zur Walzrichtung des Bandes zerschnitten werden, um eine hohe mechanische Festigkeit, die das Aushalten der Beanspruchungen im Erdbebenfall ermöglicht, und eine Abwesenheit von Kriechen zu erhalten.

3. Verfahren nach dem Anspruch 1 oder 2,

dadurch gekennzeichnet,

daß die Plättchen aus einer Legierung auf Zirkoniumsbasis hergestellt werden, die außer dem Zirkonium Zinn, Eisen und Chrom und ggf. 80 bis 270 ppm Kohlenstoff enthält und deren Nickelgehalt unter 70 ppm ist.

4. Verfahren nach dem Anspruch 1, 2 oder 3,

dadurch gekennzeichnet,

daß das Glühen bei einer Temperatur im Bereich von 440 bis 490°C während einer Dauer von 2 bis 100 Stunden durchgeführt wird.

5. Verfahren nach dem Anspruch 4,

dadurch gekennzeichnet,

daß das Glühen bei einer Temperatur der Größenordnung von 460°C während einer Dauer der Größenordnung von 24 Stunden durchgeführt wird.

## Claims

1. A method of manufacturing zirconium alloy plates comprising forming a strip by hot rolling, then cold rolling with a high degree of hammering, said strip having the same thickness as the plates to be obtained by cutting out and cold forming, characterized in that the strip is subjected to reheating for removing tensile stresses at a temperature lower than the recrystallization temperature.

2. Method according to claim 1 for manufacturing plates having abutment bosses, for use in a grid for holding nuclear fuel elements, characterized in that the plates are cut out transversely to the rolling direction of the strip so as to obtain a high degree of mechanical strength, for supporting forces in case of seism, and no creep.

3. Method according to claim 1 or 2, characterized in that the plates are of a zirconium base alloy containing tin, iron and chromium and possibly from 80 to 270 ppm of carbon in addition to zirconium, the nickel content being lower than 70 ppm.

4. Method according to claim 1, 2 or 3, characterized in that reheating is carried out at a temperature of from 440 to 490°C for a duration of from 2 to 100 hours.

5. Method according to claim 4, characterized in that said preheating is carried out at a temperature of approximately 460°C for a duration of about 24 hours.

PL. UNIQUE